# EUROPEAN PATENT SPECIFICATION

(11) **EP 2 563 109 B1**
(45) Date of publication and mention of the grant of the patent: **10.12.2014**
(21) Application number: 11717577.8
(22) Date of filing: 27.04.2011
(51) Int. Cl.: A01D 43/08

(54) **SPOUT CONTROL SYSTEM**
KONTROLLSYSTEM FÜR AUSWURFKANAL
SYSTÈME DE CONTRÔLE DE GOULOTTE DE DÉCHARGEMENT

(30) Priority: 27.04.2010 GB 201006966
(43) Date of publication of application: 06.03.2013
(73) Proprietor: AGCO GmbH, 87616 Marktoberdorf (DE)
(72) Inventor: BROCKMANN, Andreas, 87651 Bidingen (DE)
(74) Representative: AGCO Intellectual Property Department
(86) International application number: PCT/EP2011/056648
(87) International publication number: WO 2011/134993

(56) References cited:
- EP-A1- 1 092 342
- DE-A1- 19 802 199
- US-A- 3 670 913

## Description

This invention relates to a discharge spout control system for use on a harvesting machine. More specifically, this invention relates to a discharge spout control system for a swivelling discharge spout on a forage harvester.

On a forage harvester processed crop is fed from a discharge passage above a crop chopping drum to a discharge spout for discharge into a neighbouring carrier such as a tractor trailer situated alongside, or to the rear of the harvester. The spout is swivellable about a generally vertical axis so that the spout can be moved from the left, to the right of the forage harvester for discharging crop into a neighbouring carrier. When the spout is not in use the spout can be held in position facing the rear of the forage harvester.

Swivelling spout control systems usually comprise a discharge spout connected to a discharge passage. The discharge spout may be provided with gear means, such as a spur wheel which engages with a spur gear pinion mounted on the shaft so that the spout can swivel relative to the shaft. The pinion may be driven by a hydraulic motor.

EP 1092342 describes a known spout control system having a swivellable discharge spout mounted above a discharge passage. The spout is provided with an annular spur wheel which is driven by a spur gear pinion. The spur gear pinion is driven by an hydraulic motor which can be driven in opposite directions of rotation. Between the inlet line and the overflow oil line of the hydraulic motor a pressure limiting valve and a check valve are arranged. Between the outlet line and the overflow oil line of the motor a further pressure limiting valve and a check valve are arranged.

If the spout collides with an obstacle, such that a force acts on the spout in the opposite direction to which it is moving, or a force acts upon the spout whilst being held in a fixed position the oil pressure in inlet line becomes greater than the pressure set by the pressure relief valve and the high pressure in the inlet line will be conducted through the appropriate pressure limiting valve to the tank of the system via the overflow line thus preventing damage to the system.

An aim of the present invention is to provide an alternative spout control system for use on a harvesting machine which is more cost efficient and reliable.

According to the invention there is provided a spout control system for use on a forage harvester, the system comprising a discharge spout mounted on the forage harvester for discharging crop processed by the forage harvester and an hydraulic motor drivable in both directions of rotation and a gear means connecting the spout to swivel when the motor is rotated,
characterised in that a pair of oppositely acting check valves are arranged on a first pressure line extending between a motor inlet line and a motor outlet line and a shuttle valve is arranged on a second pressure line extending between the motor inlet line and motor outlet line and a pressure relief valve is arranged on a connecting line extending from the shuttle valve to between the pair of check valves so that at motor supply pressures above a level set by the pressure relief valve additional flow occurs from the inlet line through the shuttle valve, the connecting line, the pressure relief valve and through one of the check valves to the outlet line.

Preferably, the pressure relief valve is a shock valve.

Preferably, the motor inlet and outlet lines are connected to an hydraulic pump by a directional control valve

The invention shall now be described, by example only, with reference to the following drawings in which:
Figure 1 shows a partial perspective view of a discharge shaft connected to a discharge spout, and
Figures 2a and 2b show hydraulic circuit diagrams for driving the hydraulic motor.

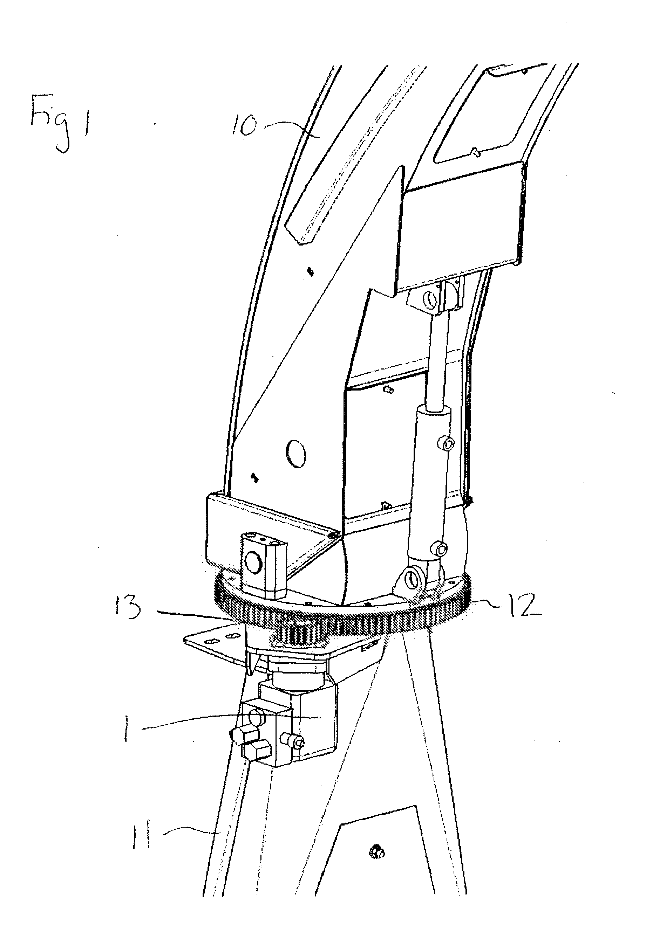

Figure 1 shows a discharge spout 10 connected to a discharge passage 11. Processed crop is fed from the cutting rolls (not shown) into the tube 11 and into the spout 10 where it is discharged into a container, such as tractor trailer. The discharge spout is provided with an annular spur gear 12 engaged by a pinion 13 driven by an hydraulic motor 1.

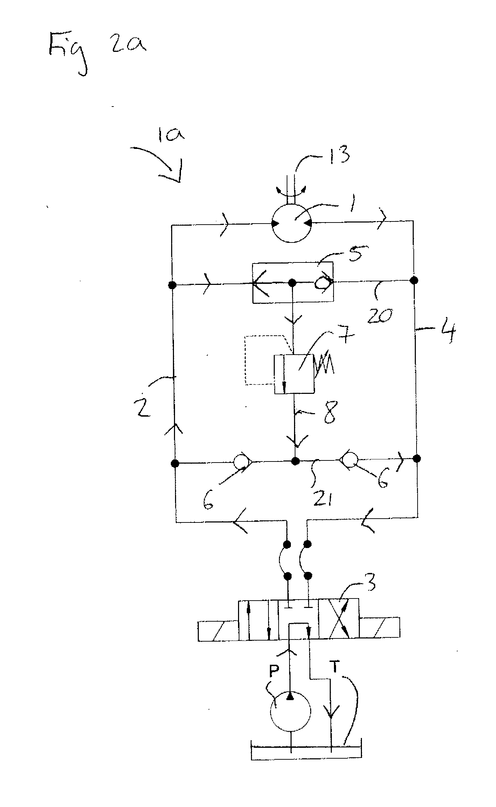

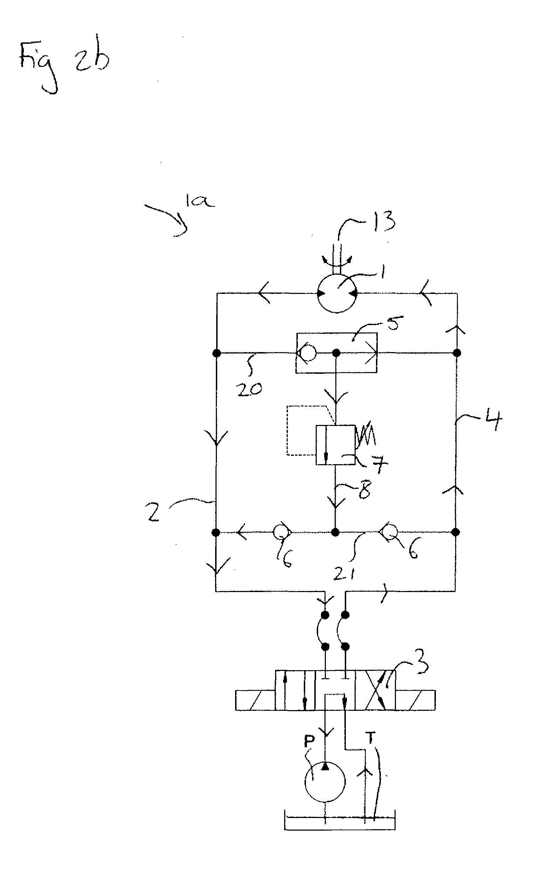

Figures 2a and 2b show the hydraulic circuit for driving motor 1 in accordance with the invention.

The hydraulic motor 1 can be driven in two directions (clockwise and anti-clockwise) and the direction of flow of oil in the circuit 1 a shown in figures 2a and 2b determines the direction of the swivel movement of the pinion 13 and therefore spout 10.

A solenoid operated directional valve 3 can be adjusted to drive the motor in either direction to swivel the spout 10 in the desired direction.

Figure 2a shows the flow of oil (indicated by the arrows) in a clockwise direction. The hydraulic circuit 1 a comprises a motor 1, an inlet line 2 and an outlet line 4. Between the inlet line 2 and outlet line 4 a first pressure line 20 with a shuttle valve 5 is arranged. A second pressure line 21 is provided between inlet line 2 and outlet line 4 with two check valves 6 directing oil flow in opposite directions. Pressure relief valve 7 is arranged in a connecting line 8 which extends from the shuttle valve 5 to between the check valves 6 and is used to set the motor 1 at maximum operating oil pressure. During movement of the spout in one direction oil pumped by pump P from tank T flows through inlet line 2 towards motor 1 and through outlet 4 back to tank T.

If the spout collides with an obstacle, such that a force acts on the spout in the opposite direction to which it is moving, or acts upon it whilst being held in a fixed position the oil pressure in inlet line 2 becomes greater than the pressure set by the pressure relief valve 7. The high oil pressure will cause the oil to flow through the shuttle valve 5 and through the pressure relief valve 7. Since the pressure in the inlet line 2 is greater than that in the outlet line 4, the oil will then flow through one of the check valves 6 into the outlet line 4 and back to the tank T thus preventing damage to the system.

Figure 2b shows the flow of oil through the circuit 1 a in an anti clockwise direction when the motor 1 is operating in the opposite direction. Essentially, outlet line 4 becomes the inlet line and inlet line 2 becomes the outlet line. Oil is pumped from tank T through outline 4 to the motor 1. If the pressure in outline 4 is too great, oil will flow through pressure line 20, through shuttle valve 5, through the pressure relief valve 7 through one of the check valves 6 and back to the tank T by inlet line 2. If the oil flows directly to the motor 1 through outlet line 4 it leaves motor 1 and flows back through inlet line 2 to tank T.

If the spout collides with an obstacle, such that a force acts on the spout in the opposite direction to which it is moving, or acts upon it whilst being held in a fixed position the oil pressure in line 4 becomes greater than the pressure set by the pressure relief valve 7 and the motor stops. The high oil pressure will cause the oil to flow through the shuttle valve 5 and through the pressure relief valve 7. Since the pressure in line 4 is greater than that in the line 2, the oil will then flow through one of the check valves 6 into line 2 and back to the tank T thus preventing damage to the system.

The system of the present invention does not require an overflow line.

Since the control system uses only one pressure relief valve, there is only one pressure relief valve which needs to be adjusted making the system easier and simpler to set up.

Further, the control system of the present invention is cost efficient and more reliable because proper function of the system can only be guaranteed if the opening pressure of the pressure relief valve 7 is the same for both clockwise and anti-clockwise flow of oil through the hydraulic circuit 1 a. Since the circuit is only provided with one pressure relief valve, one pressure setting can be used for both directions of oil flow.

## Claims

1. A spout control system for use on a forage harvester, the system comprising a discharge spout (10) mounted on the forage harvester for discharging crop processed by the forage harvester and an hydraulic motor (1) drivable in both directions of rotation and a gear means connecting the spout to swivel when the motor (1) is rotated, **characterised in that** a pair of oppositely acting check valves (6) are arranged on a first pressure line (21) extending between a motor inlet line (2) and a motor outlet line (4) and a shuttle valve (5) is arranged on a second pressure line (20) extending between the motor inlet line and motor outlet line and a pressure relief valve (7) is arranged on a connecting line extending from the shuttle valve (5) to between the pair of check valves (6) so that at motor supply pressures above a level set by the pressure relief valve (7) additional flow occurs from the inlet line through the shuttle valve (5), the connecting line, the pressure relief valve (7) and one of the check valves (6) to the outlet line thus preventing damage to the system.

2. A spout control system as claimed in claim 1 wherein the pressure relief valve (7) is a shock valve.

3. A spout control system as claimed in claim 1 or claim 2 wherein the motor (1) inlet and outlet lines are connected to an hydraulic pump (P) by a directional control valve.

## Patentansprüche

1. Steuer- oder Regelsystem für eine Abgabeeinrichtung einer Erntemaschine oder eines Mähladers mit einer Abgabeeinrichtung (10), die an dem Mählader oder der Erntemaschine montiert ist zur Abgabe von Erntegut, welches durch den Mählader oder die Erntemaschine verarbeitet wird, und mit einem hydraulischen Motor (1), der in beide Rotationsrichtungen antreibbar ist, und einem Getriebeorgan, welches mit der Abgabeeinrichtung geeignet verbunden ist, um diese mit Antrieb oder Verdrehung des Motors (1) zu verschwenken, **dadurch gekennzeichnet, dass** ein Paar von entgegengesetzt wirkenden Rückschlagventilen (6) in einer ersten Druckleitung (21), die sich zwischen einer Motoreinlassleitung (2) und einer Motorauslassleitung (4) erstreckt, angeordnet sind und ein Wechselventil (5) in einer zweiten Druckleitung (20) angeordnet ist, die sich zwischen der Motoreinlassleitung und der Motorauslassleitung erstreckt, und ein Druckbegrenzungsventil, Überströmventil oder Sicherheitsventil (7) in einer Verbindungsleitung angeordnet ist, die sich von dem Wechselventil (5) zu einem Leitungspunkt zwischen dem Paar der Rückschlagventile (6) erstreckt, so dass zur Vermeidung einer Beschädigung des Systems bei Motorversorgungsdrücken über einem von dem Druckbegrenzungsventil, Überströmventil oder Sicherheitsventil (7) vorgegebenem Druckniveau ein zusätzlicher Fluss auftritt von der Einlassleitung durch das Wechselventil (5), die Verbindungsleitung, das Druckbegrenzungsventil, Überströmventil oder Sicherheitsventil (7) und eines der Rückschlagventile (6) zu der Auslassleitung.

2. Steuer- oder Regelsystem nach Anspruch 1, wobei das Druckbegrenzungsventil, Überströmventil oder Sicherheitsventil (7) ein Schockventil ist.

3. Steuer- oder Regelsystem nach Anspruch 1 oder 2, wobei die Motoreinlassleitung (1) und die Motorauslassleitung oder Motorauslassleitungen mit einer hydraulischen Pumpe (P) durch ein direktionales Steuer- oder Regelventil verbunden sind.

## Revendications

1. Dispositif de commande de goulotte destiné à une utilisation sur une moissonneuse fourragère, le dispositif comprenant une goulotte de déchargement (10) montée sur la moissonneuse fourragère afin de décharger la récolte traitée par la moissonneuse fourragère et un moteur hydraulique (1) pouvant être commandé dans les deux sens de rotation et un moyen à engrenage reliant la goulotte de manière à pouvoir osciller lorsque le moteur (1) est entraîné en rotation,
**caractérisé en ce qu'**une paire de clapets en opposition (6) est agencée sur une première ligne de pression (21) s'étendant entre une ligne d'entrée de moteur (2) et une ligne de sortie de moteur (4) et un clapet à deux voies (5) est agencé sur une seconde ligne de pression (20) s'étendant entre la ligne d'entrée de moteur et la ligne de sortie de moteur, et une vanne de limitation de pression (7) est agencée sur une ligne de liaison s'étendant à partir du clapet à deux voies (5) vers un point entre la paire de clapets (6), de telle sorte que, lorsque la pression d'alimentation de moteur est supérieure à un niveau réglé par la vanne de limitation de pression (7), un débit supplémentaire se produit à partir de la ligne d'entrée à travers le clapet à deux voies (5), la ligne de liaison, la vanne de limitation de pression (7) et l'un des clapets (6), vers la ligne de sortie, empêchant ainsi l'endommagement du dispositif.

2. Dispositif de commande de goulotte selon la revendication 1 dans lequel la vanne de limitation de pression (7) est un clapet de choc.

3. Dispositif de commande de goulotte selon la revendication 1 ou 2, dans lequel les lignes d'entrée et de sortie de moteur (1) sont raccordées à une pompe hydraulique (P) par une soupape de contrôle directionnel.
